# EUROPÄISCHE PATENTSCHRIFT

(11) **EP 2 461 073 B1**
(45) Veröffentlichungstag und Bekanntmachung des Hinweises auf die Patenterteilung: **31.12.2014**
(21) Anmeldenummer: 11009188.1
(22) Anmeldetag: 19.11.2011
(51) Int. Cl.: F16H 47/04

(54) **Hydromechanisches Getriebe**
Hydro-mechanical drive
Engrenage hydromécanique

(30) Priorität: 02.12.2010 DE 102010053012
(43) Veröffentlichungstag der Anmeldung: 06.06.2012
(73) Patentinhaber: CLAAS Industrietechnik GmbH, 33106 Paderborn (DE)
(72) Erfinder: Gohde, Thomas, 33181 Bad Wünnenberg (DE)
(74) Vertreter: Heuer, Wilhelm

(56) Entgegenhaltungen:
- DE-A1- 4 010 919
- DE-A1- 4 443 267

## Beschreibung

Die vorliegende Erfindung betrifft ein stufenloses hydromechanisches Getriebe, insbesondere zur Verwendung im Antriebsstrang eines landwirtschaftlichen Fahrzeuges wie etwa eines Traktors.

Ein Getriebe mit stufenlos veränderbarer Übersetzung ist als reines Zahnradgetriebe nicht realisierbar. Ein robustes, für Anwendungen in Fahrzeugantrieben ausreichend belastbares Getriebe mit stufenlos veränderbarer Übersetzung ist ein hydrostatisches Getriebe. Ein solches hydrostatisches Getriebe umfasst herkömmlicherweise zwei hydrostatische Einheiten, die in einem Fluidkreislauf miteinander verbunden sind und von denen jeweils eine als Pumpe und die andere als Motor arbeitet. Indem, z.B. durch Schwenken einer Gleitscheibe, das Schluckvolumen wenigstens einer dieser beiden hydrostatischen Einheiten variiert wird, ist eine stufenlose Verstellung der Übersetzung des hydrostatischen Getriebes realisierbar.

Ein Nachteil der hydrostatischen Getriebe ist, dass sie höhere Reibungsverluste als mechanische Getriebe aufweisen. Um diesen Nachteil wenigstens teilweise zu beheben, sind hydromechanische Getriebe vorgeschlagen worden, die ein hydrostatisches Getriebe mit einem mechanischen Verzweigungsgetriebe kombinieren. Indem das hydrostatische Getriebe mit einem Ausgleichsanschluss des Verzweigungsgetriebes drehverbunden ist, beeinflusst es die Drehzahl eines Ausgangsanschlusses des Verzweigungsgetriebes proportional zu seinem eigenen Übersetzungsverhältnis. Da jeweils nur Teil der Gesamtleistung über das hydrostatische Getriebe übertragen wird, sind die Verluste geringer als bei einem rein hydrostatischen Getriebe. Der über das hydrostatische Getriebe übertragene Anteil ist insbesondere dann gering, wenn ein extremes Übersetzungsverhältnis des hydrostatischen Getriebes eingestellt und sein Wirkungsgrad deshalb schlecht ist.

Dieser Vorteil des hydromechanischen Getriebes ist erkauft durch eine im Vergleich zum hydrostatischen Getriebe geringere Spreizung. Um die Spreizung wieder zu vergrößern, wurde z.B. in DE 40 10 919 A1 ein hydromechanisches Getriebe mit mehreren Fahrbereichen nach dem Oberbegriff des Anspruchs 1 vorgeschlagen. Drei Kupplungen erlauben es hier, das hydrostatische Getriebe wahlweise mit zwei Ausgleichsanschlüssen des Verzweigungsgetriebes oder mit einem Ausgleichsanschluss und einem Ausgangsanschluss des Verzweigungsgetriebes zu verbinden und auf diese Weise Vorwärtsfahrbereiche mit unterschiedlichen Übersetzungsbereichen zu realisieren. Beim Umschalten zwischen einem ersten und einem zweiten dieser Fahrbereiche ist der Schwenkwinkel einer der hydrostatische Einheiten des hydrostatischen Getriebes minimal, so dass die Fördermenge und der vom hydrostatischen Getriebe übertragene Leistungsanteil Null sind und die Kupplungen last-frei geschaltet werden können. Beim Umschalten vom zweiten in einen dritten Fahrbereich sind jedoch beide hydrostatischen Einheiten maximal ausgeschwenkt, so dass zwischenzeitlich eine Drehzahl- und Druckangleichung erforderlich ist.

Aufgabe der Erfindung ist, ein hydromechanisches Getriebe anzugeben, bei dem ein Drehzahlsprung beim Umschalten zwischen zweien der Vorwärtsfahrbereiche vermeidbar ist.

Die Aufgabe wird gelöst durch ein stufenloses hydromechanisches Getriebe mit den Merkmalen des Anspruchs 1.

Wenn die Anschlüsse des Verzweigungsgetriebes einen Eingangsanschluss, einen Ausgangsanschluss und zwei Ausgleichsanschlüsse umfassen, kann vorzugsweise in einem der Vorwärtsfahrbereiche die Kupplungsanordnung eine eingangsseitige Anordnung des hydrostatischen Getriebes in Bezug auf das Verzweigungsgetriebe herstellen, indem sie das das hydrostatische Getriebe mit dem Eingangsanschluss und einem der Ausgleichsanschlüsse verbindet.

Weitere Anordnungsmöglichkeiten sind eine entkoppelten Anordnung, in der die Kupplungsanordnung das hydrostatische Getriebe mit beiden Ausgleichsanschlüssen verbindet, und eine ausgangsseitige Anordnung, in der die Kupplungsanordnung das hydrostatische Getriebe mit einem der Ausgleichsanschlüsse und dem Ausgangsanschluss verbindet.

Die entkoppelte Anordnung entspricht vorzugsweise einem mittleren Übersetzungsbereich des hydromechanischen Getriebes, während die übrigen Anordnungen einen unteren bzw. oberen Übersetzungsbereich bilden. So genügt für einen Wechsel zwischen benachbarten Übersetzungsbereichen ein Umschalten eines einzigen Anschlusses des hydrostatischen Getriebes zwischen einem Ausgleichsanschluss und dem Eingangs- oder Ausgangsanschluss.

Vorzugsweise verbindet die Kupplungsanordnung das hydrostatische Getriebe in der ausgangsseitigen Anordnung mit dem ersten Ausgleichsanschluss und in der eingangsseitigen Anordnung mit dem zweiten Ausgleichsanschluss verbindet. Hierfür genügt eine einfache Kupplungsanordnung mit zwei doppelt wirkenden Kupplungen.

Ein Verzweigungsgetriebe mit zwei Ausgleichsanschlüssen kann in Form von zwei Planetengetriebestufen realisiert sein.

Um ein Rückwärtsfahren eines mit dem erfindungsgemäßen Getriebe ausgestatteten Fahrzeugs zu ermöglichen, ist vorzugsweise eine Reversiergetriebestufe zwischen einem Antriebsanschluss und einem Abtriebsanschluss des hydromechanischen Getriebes in Reihe mit dem Verzweigungsgetriebe verbunden.

Wenn das hydrostatische Getriebe in an sich bekannter Weise einen Fluidkreislauf mit zwei hydrostatischen Einheiten umfasst, sollten deren Schluckvolumina zweckmäßigerweise unabhängig voneinander verstellbar sein. Dies ist insbesondere wichtig, wenn ein Umschalten zwischen zwei Anordnungen des hydrostatischen Getriebes stattfindet, während dieses unter Last steht. Damit das hydrostatische Getriebe Last übertragen kann, muss an ihm ein von Null und Unendlich verschiedenes Übersetzungsverhältnis eingestellt sein. Um einen Drehzahlsprung beim Umschalten zwischen den zwei Anordnungen des hydrostatischen Getriebes zu vermeiden, sollte zum Umschalten ein von Null und Unendlich verschiedenes Übersetzungsverhältnis eingestellt sein, das in beiden Anordnungen dasselbe globale Übersetzungsverhältnis zwischen Antriebs- und Abtriebsanschluss des hydromechanischen Getriebes ergibt.

Der prozentuale Anteil der Leistung, der über das hydrostatische Getriebe fließt, kann in den zwei Anordnungen durchaus unterschiedlich sein, so dass aus dem Umschalten zwischen den Anordnungen ein Drucksprung in der Fluidleitung resultiert. Um diesen Drucksprung in Grenzen zu halten, ist eine Steuereinheit des Leistungsgetriebes zweckmäßigerweise eingerichtet, das für die Umschaltung vorgegebene Übersetzungsverhältnis bei einer hohen Drehzahl des Antriebsanschlusses mit kleineren Schluckvolumina der hydrostatischen Einheiten zu realisieren als bei einer niedrigen Drehzahl des Antriebsanschlusses.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein schematisches Schaubild des erfindungsgemäßen hydromechanischen Getriebes;
- Fig. 2: eine alternative Ausgestaltung einer Reversiergetriebestufe für das hydromechanische Getriebe;
- Fig. 3: den prozentualen Anteil der von dem hydrostatischen Getriebe übertragenen Leistung an der von dem hydromechanischen Getriebe insgesamt übertragenen Leistung als Funktion von dessen globalem Übersetzungsverhältnis;
- Fig. 4: die Schwenkwinkel der beiden hydrostatischen Einheiten als Funktion der globalen Übersetzung gemäß einer ersten Schwenkstrategie;
- Fig. 5: die aus der Schwenkstrategie der Fig. 4 resultierende Drehzahl der ersten hydrostatischen Einheit in Abhängigkeit vom globalen Übersetzungsverhältnis bei niedriger Getriebeeingangsdrehzahl;
- Fig. 6: die Druckdifferenz im hydrostatischen Getriebe als Funktion der Übersetzung bei niedriger Eingangdrehzahl;
- Fig. 7: die Entwicklung der Drehzahl der ersten hydrostatischen Einheit in Abhängigkeit vom globalen Übersetzungsverhältnis bei hoher Getriebeeingangsdrehzahl;
- Fig. 8: eine zu Fig. 4 analoge Darstellung der Schwenkwinkel als Funktion der globalen Übersetzung gemäß einer zweiten Schwenkstrategie;
- Fig. 9: die Druckdifferenz im Falle der Schwenkstrategie der Fig. 8 bei niedriger Getriebeeingangsdrehzahl;
- Fig. 10: die Drehzahl der ersten hydrostatischen Einheit als Funktion des globalen Übersetzungsverhältnisses bei hoher Getriebeeingangsdrehzahl; und
- Fig 11: eine zu Fig. 9 analoge Darstellung der Druckdifferenz als Funktion der globalen Übersetzung bei hoher Getriebeeingangsdrehzahl.

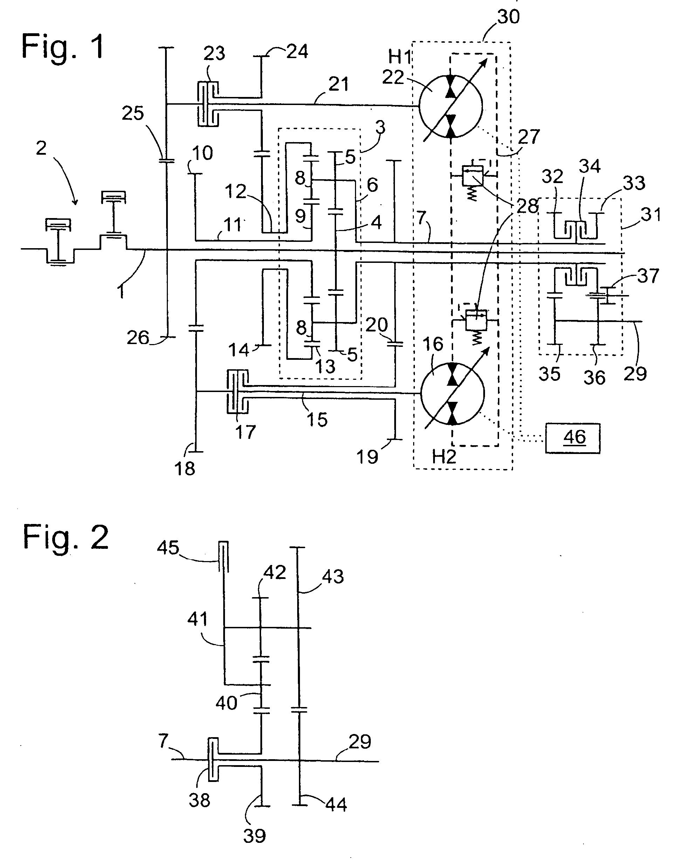

Fig. 1 veranschaulicht in einer schematischen Darstellung den Aufbau des erfindungsgemäßen hydromechanischen Getriebes. Eine Antriebswelle 1 des hydromechanischen Getriebes ist mit einem schematisch durch an der Antriebswelle 1 angreifende Pleuelstangen angedeuteten Motor 2 verbunden. Die Antriebswelle 1 ist gleichzeitig Eingangswelle eines zweistufigen Planetengetriebes 3. Ein Sonnenrad 4 einer ersten Stufe des Planetengetriebes 3 ist drehfest auf der Antriebswelle 1 montiert. Das Sonnenrad 4 kämmt mit Planetenrädern 5, deren Planetenträger 6 fest mit einer Ausgangswelle 7 des Planetengetriebes 3 verbunden ist und gleichzeitig Planetenräder 8 einer zweiten Stufe des Planetengetriebes 3 trägt. Diese Planetenräder 8 kämmen einerseits mit einem zweiten Sonnenrad 9, das zusammen mit einem Zahnrad 10 drehfest auf einer um die Antriebswelle 1 drehbaren Hohlwelle 11 sitzt, und andererseits mit einem Hohlrad 13, das über eine die Hohlwelle 11 umgebende weitere Hohlwelle 12 mit einem Zahnrad 14 verbunden ist.

Eine erste Vorgelegewelle 15 ist mit einer ersten hydrostatischen Einheit 16 verbunden und trägt eine Kupplung 17, um die hydrostatische Einheit 16 wahlweise mit einem Zahnrad 18 zu verbinden, das mit dem als ein Ausgleichsanschluss des Planetengetriebes 3 fungierenden Zahnrad 10 kämmt, oder die hydrostatische Einheit 16 mit einem Zahnrad 19 zu verbinden, das mit einem auf der Ausgangswelle 7 drehfesten Zahnrad 20 kämmt.

In analoger Weise ist eine zweite Vorlegewelle 21 mit einer zweiten hydrostatischen Einheit 22 verbunden und trägt eine Kupplung 23, die es erlaubt, die hydrostatische Einheit 22 wahlweise mit einem Zahnrad 24, das mit dem als ein zweiter Ausgleichsanschluss des Planetengetriebes 3 fungierenden Zahnrad 14 dient, oder einem Zahnrad 25 zu verbinden, das mit einem auf der Antriebswelle 1 festen Zahnrad 26 kämmt.

Die hydrostatischen Einheiten 16, 22 sind an sich bekannte Axialkolbeneinheiten, deren Kolben durch Rotation relativ zu einer Gleitscheibe betätigt werden. Der Schwenkwinkel der Gleitscheiben ist bei beiden Einheiten 16, 22 jeweils unabhängig voneinander verstellbar. Er bestimmt das Schluckvolumen der betreffenden Einheit 16 bzw. 22. Die Einheiten 16, 22 sind untereinander durch eine Fluidleitung 27 im Kreis verbunden, so dass von einer der Einheiten 16, 22 gepumptes Hydraulikfluid die jeweils andere Einheit antreibt. Jede der beiden Einheiten 16, 22 kann sowohl als Pumpe als auch als Motor arbeiten. Um eine Drucküberlastung der Fluidleitung 27 und der Einheiten 16, 22 zu verhindern, falls eine der Einheiten 16, 22 mit sehr kleinem Schluckvolumen als Pumpe arbeitet, sind ein Hochdruck- und ein Niederdruckzweig der Fluidleitung 27 miteinander über Druckbegrenzungsventile 28 verbunden.

Das von den hydrostatischen Einheiten 16, 22 und der Fluidleitung 27 gebildete hydrostatische Getriebe 30 ist mit Hilfe der Kupplungen 17, 23 in drei verschiedenen Anordnungen mit dem Planetengetriebe 3 verbindbar, die drei verschiedenen Fahrbereichen des hydromechanischen Getriebes entsprechen. Die erste Anordnung ist ausgangsseitig, d.h. das hydrostatische Getriebe 30 ist mit dem Zahnrad 20 der Ausgangswelle 7 und dem Ausgleichsanschluss-Zahnrad 14 verbunden. Im zweiten Fahrbereich bleibt die Verbindung zum Zahnrad 14 bestehen, und die zum ausgangsseitigen Zahnrad 20 wird ersetzt durch eine Verbindung zum zweiten Ausgleichsanschluss-Zahnrad 10. Im dritten Fahrbereich wird die Verbindung zum Zahnrad 14 ersetzt durch eine Verbindung zu dem eingangsseitigen Zahnrad 26. Die Drehrichtung der Ausgangswelle 7 ist in allen drei Fahrbereichen dieselbe.

Um mit dem hydromechanischen Getriebe ein Fahrzeug in Vorwärts- und Rückwärtsfahrt antreiben zu können, wird daher eine Reversiergetriebestufe 31 benötigt. Wenn beide hydrostatische Einheiten 16, 22 mit wechselnden Drehrichtungen laufen können, kann eine solche Reversiergetriebestufe 31 zwischen der Antriebswelle 1 des hydromechanischen Getriebes und einer Eingangswelle des Planetengetriebes 3 angeordnet sein. Fig. 1 zeigt den gegenteiligen Fall, bei dem die Antriebswelle 1 des hydromechanischen Getriebes mit der Eingangswelle des Planetengetriebes 3 identisch ist und die Reversiergetriebestufe 31 die Ausgangswelle 7 des Planetengetriebes. 3 mit einer Abtriebswelle 29 des hydromechanischen Getriebes verbindet.

Bei der in Fig. 1 gezeigten Ausgestaltung umfasst die Reversiergetriebestufe 31 zwei Losräder 32, 33 auf der Ausgangswelle 7, eine Kupplung 34 zum wahlweisen Koppeln eines der Losräder 32, 33 an die Drehung der Ausgangswelle 7, sowie zwei Festräder 35, 36 auf der Abtriebswelle 29, von denen eines, 35, unmittelbar mit dem Losrad 32 kämmt und das andere, 36, mit dem Losrad 33 über ein die Drehrichtung umkehrendes Zwischenrad 37 verbunden ist. Die Übersetzungsverhältnisse vom Losrad 32 zum Festrad 35 bzw. vom Losrad 33 zum Festrad 36 sind entgegengesetzt gleich, so dass ein mit dem Getriebe der Fig. 1 ausgestattetes Fahrzeug vorwärts und rückwärts gleich schnell fahren kann.

Eine elektronische Steuereinheit 46 steuert die Schwenkwinkel der hydrostatischen Einheiten 16, 22 und ggf. auch die Kupplungen 17, 23, 34 in Abhängigkeit von einer eine gewünschte Übersetzung spezifizierenden Eingabe eines Fahrers.

Wenn ein radialer Versatz zwischen Antriebswelle 1 und Abtriebswelle 29 nicht gewünscht ist, kommt als Alternative eine Reversiergetriebestufe vom in Fig. 2 gezeigten Typ in Betracht, die ein modifiziertes Planetengetriebe umfasst. Die Abtriebswelle 29 ist hier koaxial zur Ausgangswelle 7 des Planetengetriebes 3 und mit letzterer für die Vorwärtsfahrt über eine Kupplung 38 verbindbar. Die Ausgangswelle 7 trägt ein Sonnenrad 39, das mit ersten Planetenrädern 40 kämmt. Ein Planetenträger 41 trägt die Planetenräder 40, mit ihnen kämmende zweite Planetenräder 42 sowie mit letzteren auf einer gleichen Achse drehfest verbundene, axial versetzte Planetenräder 43, die wiederum mit einem Sonnenrad 44 auf der Abtriebswelle 29 kämmen. Bei Rückwärtsfahrt ist die Kupplung 38 offen, und eine Bremse 45 fixiert den Planetenträger 41.

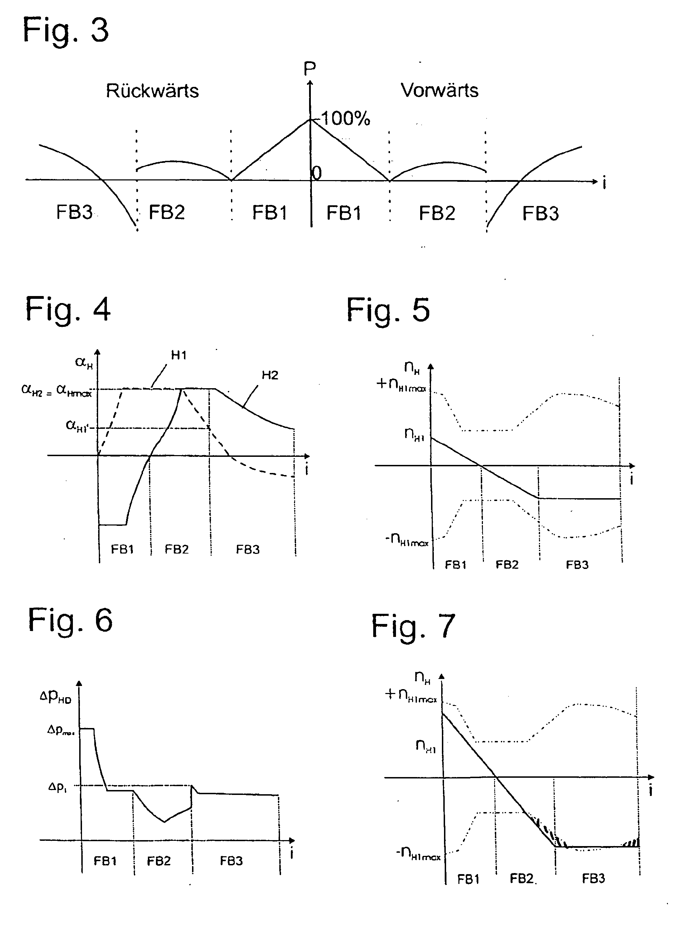

Der in den Fig. 3 bis 11 mit FB1 bezeichnete erste Fahrbereich entspricht der ausgangsseitigen Anordnung des hydrostatischen Getriebes, d.h. die Kupplung 17 koppelt das ausgangsseitige Zahnrad 20 an die hydrostatische Einheit 16, und die Kupplung 23 das Ausgleichsanschluss-Zahnrad 14 an die hydrostatische Einheit 22. Wenn der Schwenkwinkel der hydrostatischen Einheit 22 Null ist, kann die Welle 21 frei rotieren, und die Antriebswelle 1 treibt über das Sonnenrad 4 eine Drehung der Planetenräder 5, 8 an, bei der die Ausgangswelle 7 nicht mitgenommen wird. Das Übersetzungsverhältnis (das Verhältnis Abtriebsdrehzahl/Antriebsdrehzahl) ist null.

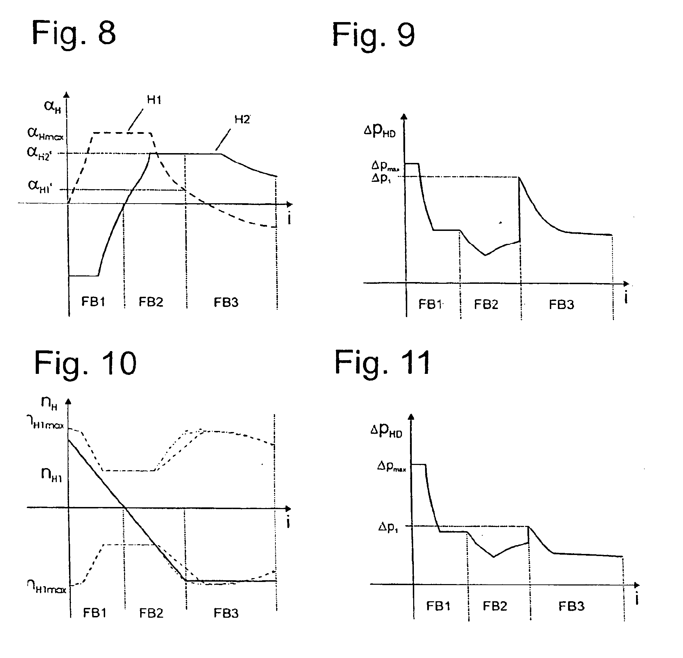

Gleichzeitig ist die hydrostatische Einheit 16 mit negativem Schwenkwinkel voll ausgeschwenkt, wie in Fig. 4 bzw. 8 zu erkennen. Wenn die hydrostatische Einheit 22 geringfügig von Null in Richtung positiver Schwenkwinkel verschwenkt wird, beginnt sie, als Pumpe mit niedrigem Schluckvolumen zu arbeiten, und treibt die hydrostatische Einheit 16 mit niedrigem Übersetzungsverhältnis an. Mit zunehmendem Schwenkwinkel α_{H2} der Einheit 22 nimmt der Anteil der über das hydrostatische Getriebe 30 übertragenen Leistung von anfangs 100% immer weiter ab, wie in Fig. 3 zu erkennen.

Wenn die hydrostatische Einheit 22 ihren maximalen Schwenkwinkel α_{H2} = α_{Hmax} erreicht hat, ist eine weitere Steigerung des Übersetzungsverhältnisses, sowohl des hydrostatischen Getriebes 30 als auch des gesamten Ausgleichsgetriebes, nur möglich, indem der Schwenkwinkel α_{H1} der hydrostatischen Einheit 16 von seinem negativen Maximalwert -α_{Hmax} gegen Null geht, wie in Fig. 4 gezeigt. Wenn der Schwenkwinkel α_{H1} der hydrostatischen Einheit 16 Null ist, ist die als Pumpe arbeitende Einheit 22 effektiv blockiert, und mit ihr das Hohlrad 13. Es wird keine Leistung mehr über das Hydraulikgetriebe übertragen.

In diesem Stadium erfolgt die Umschaltung in den Fahrbereich FB2, indem die Kupplung 17 das Zahnrad 19 freigibt und stattdessen die hydrostatische Einheit 16 mit dem Zahnrad 18 verbindet. Diese Umschaltung hat auf die Drehzahl der diversen Zahnräder des Getriebes keinen Einfluss, da die Einheit 16 im Leerlauf drehbar ist und die Einheit 22 blockiert bleibt.

Im zweiten Fahrbereich FB2 wird zunächst die Einheit 16 weiter in Richtung eines positiven Schwenkwinkels geschwenkt, d.h. α_{H2} nimmt zu, und der Anteil der vom hydrostatischen Getriebe 30 übertragenen Leistung nimmt ebenfalls wieder zu, wie in Fig. 3 zu erkennen. Auch die Übersetzung nimmt weiter zu, bis der Schwenkwinkel α_{H2} der Einheit 16 den Maximalwert α _{Hmax} erreicht. Eine weitere Steigerung des Übersetzungsverhältnisses ist dann wiederum nur durch Zurückschwenken der Einheit 22 möglich, d.h. α_{H1} geht von α_{Hmax} zurück gegen Null, während α_{H2} = α_{Hmax} bleibt.

Im Laufe dieses Zurückschwenkens wird eine Stellung erreicht, in der sich die Drehzahlen der zweiten Vorgelegewelle 21 und des Zahnrades 25 angleichen. In dieser Stellung erfolgt der Übergang zum dritten Fahrbereich FB3, indem die Kupplung 23 das Zahnrad 24 freigibt und das Zahnrad 25 an die Vorgelegewelle 21 koppelt. Wie in Fig. 4 zu erkennen, kann das Übersetzungsverhältnis nun weiter gesteigert werden, indem die Einheit 22 weiter zurückgeschwenkt wird und ihr Schwenkwinkel α_{H1} schließlich sogar wieder negativ wird, und gleichzeitig auch der Schwenkwinkel α_{H2} der Einheit 16 reduziert wird.

Die hydrostatischen Einheiten 16, 22 dürfen im Betrieb eine maximale Drehzahl nicht überschreiten, die umso niedriger ist, je größer der Schwenkwinkel der betreffenden Einheit ist. Diese maximale Drehzahl n_{H1max} bzw. -n_{H1max} ist in Fig. 5 für die hydrostatische Einheit 22 in Abhängigkeit vom Übersetzungsverhältnis als Strichpunktlinie dargestellt. Im unteren Übersetzungsbereich des Fahrbereich FB1 nimmt n_{H1max} kontinuierlich mit dem Übersetzungsverhältnis i ab, entsprechend dem in diesem Bereich zunehmenden Schwenkwinkel α_{H1}, verharrt auf einem niedrigen Wert, so lange die Einheit 22 voll ausgeschwenkt ist, und erreicht im Fahrbereich FB3 ihr Maximum, wenn der Schwenkwinkel α_{H1} durch Null geht. Wenn die Antriebswelle 1 mit geringer Drehzahl angetrieben ist, ergeben sich daraus keine Probleme, wie ebenfalls in Fig. 5 zu erkennen: die Drehzahl n_{H1} der Einheit 22 verändert sich in den Fahrbereichen FB1, FB2 linear, wobei sie an der Grenze der Fahrbereiche FB1, FB2 ihr Vorzeichen wechselt, und bleibt in FB3 innerhalb der durch +n_{H1max} und -n_{H1max} vorgegebenen Grenzen konstant.

Die Druckdifferenz Δp zwischen Hoch- und Niederdruckzweig der Fluidleitung 27 entwickelt sich unter Zugrundelegung der in Fig. 4 gezeigten Paarungen von Schwenkwinkeln α_{H1}, α_{H2} in den Fahrbereichen FB1, FB2 stetig mit dem Übersetzungsverhältnis i, wie in Fig. 6 gezeigt, wobei ein konstanter Pegel Δpₘₐₓ der Druckdifferenz Δp zu Beginn des Fahrbereichs FB1 auf die Wirkung der Druckbegrenzungsventile 28 zurückzuführen ist. Beim Wechsel zum Fahrbereich FB3 tritt ein Drucksprung auf, der allerdings bei niedrigen Drehzahlen der Antriebswelle 1 sicher innerhalb der zulässigen Grenzen liegt.

Die Drehzahl der hydrostatischen Einheit 22 ist immer proportional zur Drehzahl der Antriebswelle 1. D.h., wenn die Antriebswelle 1 schneller läuft als im in Fig. 5 betrachteten Fall, wird die Kurve n_{H1} im Vergleich zu Fig. 5 vertikal gespreizt, und wenn man annimmt, dass die Schwenkwinkel α_{H1}, α_{H2} der Einheiten 16, 22 immer mit der in Fig. 4 gezeigten Abfolge verstellt werden, dann muss sie bei hohen Drehzahlen schließlich, wie in Fig. 7 gezeigt, an der Grenze der Fahrbereiche FB 2, FB 3 den zulässigen Bereich verlassen. Die in Fig. 4 gezeigte Abfolge der Verstellung der Schwenkwinkel α_{H1}, α_{H2} ist daher zwar für niedrige Eingangsdrehzahlen geeignet, nicht aber für hohe.

Eine alternative Schwenkstrategie ist in Fig. 8 in einer zu Fig. 4 analogen Darstellung gezeigt. Hier wird im Laufe des Fahrbereichs FB 2 die Einheit 16 nicht bis zum maximal möglichen Winkel α _{Hmax} ausgeschwenkt, sondern nur bis zu einem kleineren Wert α_{H2'}. Sobald die Einheit 16 den Schwenkwinkel α_{H2*'*} erreicht hat, wird zum weiteren Steigern der Übersetzung i mit dem Zurückschwenken der Einheit 22 begonnen. Der Schwenkwinkel α_{H1'} der Einheit 22, bei dem Drehzahlgleichheit zwischen den Zahnrädern 24, 25 ein Umschalten der Kupplung 23 ermöglicht, ist in diesem Fall kleiner als im Falle der Fig. 4. Die Verkleinerung des Schwenkwinkels α_{H1'} führt dazu, dass an der Grenze der Fahrbereiche FB2, FB3 nun höhere Drehzahlen der hydrostatischen Einheit 22 zulässig sind als im Fall der Fig. 7. Fig. 10 verdeutlicht dies anhand zweier Grenzwertkurven für die Drehzahl der Einheit 22, einer gestrichelten Kurve, deren Verlauf dem in Fig. 7 gezeigten entspricht und die von der Drehzahl n_{H1} überschritten wird, und einer strichpunktierten Kurve, die den Verlauf der maximal zulässigen Drehzahl unter Zugrundelegung der Schwenkstrategie der Fig. 8 zeigt und die nicht überschritten wird. Das Problem, das bei hoher Eingangsdrehzahl an der Antriebswelle 1 die Drehzahl der Einheit 22 die zulässigen Grenzen überschreiten kann, kann also behoben werden, indem die Einheit 16 nicht bis zum maximalen Wert α _{Hmax} ausgeschwenkt wird, sondern nur bis zu einem kleineren Winkel α_{H2'}.

Ein geringer Schwenkwinkel α_{H2} der Einheit 16 führt zunächst dazu, dass diese, wenn sie als Pumpe arbeitet, eine hohe Druckdifferenz auf der Fluidleitung 27 erzeugen kann und dass insbesondere beim Übergang vom Fahrbereich FB2 nach FB3 ein in Fig. 9 gezeigter starker Drucksprung auftreten kann, der das hydrostatische Getriebe 30 strapaziert und es unter Umständen schädigen kann. Um auch dieses Problem zu vermeiden, ist die Steuereinheit 46, die die Schwenkwinkel α_{H1}, α_{H2} der hydrostatischen Einheiten 16, 22 steuert, eingerichtet, den Schwenkwinkel α_{H2'}, bis zu dem die Einheit 16 im Fahrbereich FB1 maximal ausgeschwenkt wird, als Funktion der Drehzahl der Antriebswelle 1 festzulegen. Indem der Winkel α_{H2'} bei niedriger Drehzahl der Antriebswelle 1 gleich α_{Hmax} gesetzt wird, kann die Druckdifferenz auf der Fluidleitung 27 im zulässigen Rahmen gehalten werden. Bei hoher Drehzahl der Antriebswelle 1 besteht keine Gefahr einer unzulässig hohen Druckdifferenz auf der Fluidleitung 27; hier kann durch Reduzieren des maximalen Schwenkwinkels α_{H2'} der Einheit 16 auf einen Wert < α_{Hmax} die Gefahr einer Überschreitung der zulässigen Höchstdrehzahl an der hydrostatischen Einheit 22 vermieden werden.

### Bezugszeichen

- 1: Zahnrad
- 2: Motor
- 3: Planetengetriebe
- 4: Sonnenrad
- 5: Planetenrad
- 6: Planetenträger
- 7: Ausgangswelle
- 8: Planetenrad
- 9: Sonnenrad
- 10: Zahnrad
- 11: Hohlwelle
- 12: Hohlwelle
- 13: Hohlrad
- 14: Zahnrad
- 15: Vorgelegewelle
- 16: hydrostatische Einheit
- 17: Kupplung
- 18: Zahnrad
- 19: Zahnrad
- 20: Zahnrad
- 21: Vorgelegewelle
- 22: hydrostatische Einheit
- 23: Kupplung
- 24: Zahnrad
- 25: Zahnrad
- 26: Zahnrad
- 27: Fluidleitung
- 28: Druckbegrenzungsventil
- 29: Abtriebswelle
- 30: hydrostatisches Getriebe
- 31: Reversiergetriebestufe
- 32: Losrad
- 33: Losrad
- 34: Kupplung
- 35: Festrad
- 36: Festrad
- 37: Zwischenrad
- 38: Kupplung
- 39: Sonnenrad
- 40: Planetenrad
- 41: Planetenträger
- 42: Planetenrad
- 43: Planetenrad
- 44: Sonnenrad
- 45: Bremse
- 46: Steuereinheit

## Patentansprüche

1. Hydromechanisches Getriebe mit einem mechanischen Verzweigungsgetriebe (3), das mehrere Anschlüsse (1, 7, 10, 14) zum Einspeisen oder Abgreifen von Drehmoment aufweist, einem stufenlos verstellbaren hydrostatischen Getriebe (30) und einer Kupplungsanordnung (17, 23) zum Verbinden des hydrostatischen Getriebes (30) mit jeweils zweien der Anschlüsse (1, 7, 10, 14) des Verzweigungsgetriebes, wobei das hydromechanische Getriebe wenigstens drei Vorwärtsfahrbereiche aufweist und in jedem Vorwärtsfahrbereich die Kupplungsanordnung (17, 23) das hydrostatische Getriebe (30) mit einem anderen Paar der Anschlüsse (1, 7, 10, 14) des Verzweigungsgetriebes (3) verbindet, **dadurch gekennzeichnet, dass** an dem hydrostatischen Getriebe (30) ein von 0 und ∞ verschiedenes Übersetzungsverhältnis einstellbar ist, das in zweien der Vorwärtsfahrbereiche dasselbe globale Übersetzungsverhältnis (i) zwischen einem Antriebsanschluss (1) und einem Abtriebsanschluss (29) des hydromechanischen Getriebes ergibt, und dass eine Steuereinheit (46) eingerichtet ist, eine Umschaltung zwischen den zwei Vorwärtsfahrbereichen nur bei diesem von 0 und ∞ verschiedenen Übersetzungsverhältnis vorzunehmen.

2. Hydromechanisches Getriebe nach Anspruch 1, **dadurch gekennzeichnet, dass** die Anschlüsse (1, 7, 10, 14) des Verzweigungsgetriebes einen Eingangsanschluss (1), einen Ausgangsanschluss (7) und zwei Ausgleichsanschlüsse (10, 14) umfassen und dass in einem der Vorwärtsfahrbereiche die Kupplungsanordnung (17, 23) das hydrostatische Getriebe (30) in einer eingangsseitigen Anordnung mit dem Eingangsanschluss (1) und einem der Ausgleichsanschlüsse (10) verbindet.

3. Hydromechanisches Getriebe nach Anspruch 2, **dadurch gekennzeichnet, dass** in einem der Vorwärtsfahrbereiche die Kupplungsanordnung (17, 23) das hydrostatische Getriebe (30) in einer entkoppelten Anordnung mit beiden Ausgleichsanschlüssen (10, 14) verbindet.

4. Hydromechanisches Getriebe nach Anspruch 3, **dadurch gekennzeichnet, dass** die entkoppelte Anordnung einem mittleren Übersetzungsbereich des hydromechanischen Getriebes entspricht.

5. Hydromechanisches Getriebe nach einem der Ansprüche 2 bis 4, **dadurch gekennzeichnet, dass** in einem der Vorwärtsfahrbereiche die Kupplungsanordnung (17, 23) das hydrostatische Getriebe (30) in einer ausgangsseitigen Anordnung mit einem der Ausgleichsanschlüsse (14) und dem Ausgangsanschluss (7) verbindet.

6. Hydromechanisches Getriebe nach Anspruch 2 und Anspruch 5, **dadurch gekennzeichnet, dass** die Kupplungsanordnung (17, 23) das hydrostatische Getriebe (30) in der ausgangsseitigen Anordnung mit dem ersten Ausgleichsanschluss (14) und in der eingangsseitigen Anordnung mit dem zweiten Ausgleichsanschluss (10) verbindet.

7. Hydromechanisches Getriebe nach einem der vorhergehenden Ansprüche, **dadurch gekennzeichnet, dass** das Verzweigungsgetriebe (3) zwei Planetengetriebestufen (4, 5, 6; 8, 9, 6) umfasst.

8. Hydromechanisches Getriebe nach einem der vorhergehenden Ansprüche, **dadurch gekennzeichnet, dass** das Verzweigungsgetriebe (3) und eine zwischen Vorwärts- und Rückwärtslauf umschaltbare Reversiergetriebestufe (31) in Reihe zwischen dem Antriebsanschluss (1) und dem Abtriebsanschluss (29) des hydromechanischen Getriebes verbunden sind.

9. Hydromechanisches Getriebe nach einem der vorhergehenden Ansprüche, **dadurch gekennzeichnet, dass** das hydrostatische Getriebe (30) einen Fluidkreislauf (27) mit zwei hydrostatischen Einheiten (16, 22) umfasst, deren Schluckvolumina unabhängig voneinander verstellbar sind.

10. Hydromechanisches Getriebe nach Anspruch 9, **dadurch gekennzeichnet, dass** das von 0 und ∞ verschiedene Übersetzungsverhältnis mit unterschiedlichen Schluckvolumina der hydrostatischen Einheiten (16, 22) realisierbar ist, und dass die Steuereinheit (46) eingerichtet ist, das Übersetzungsverhältnis bei einer hohen Drehzahl des Antriebsanschlusses (1) mit kleineren Schluckvolumina zu realisieren als bei einer niedrigen Drehzahl des Antriebsanschlusses (1).

## Claims

1. Hydromechanical transmission having a mechanical torque-splitting transmission (3) which has a plurality of connections (1, 7, 10, 14) for feeding in or feeding out torque, having a continuously variable hydrostatic transmission (30), and having a clutch system (17, 23) for connecting the hydrostatic transmission (30) to two at a time of the connections (1, 7, 10, 14) of the torque-splitting transmission, the hydromechanical transmission having at least three forward drive modes and the clutch system (17, 23) connecting the hydrostatic transmission (30) to a different pair of the connections (1, 7, 10, 14) of the torque-splitting transmission (3) in each forward drive mode, **characterised in that** there can be set at the hydrostatic transmission (30) a transmission ratio different from 0 and ∞ which, in two of the forward drive modes, produces the same overall transmission ratio (i) between a driving connection (1) and an output drive connection (29), and **in that** a control unit (46) is adapted to make a changeover between the two forward drive modes only at a time when this transmission ratio different from 0 and ∞ applies.

2. Hydromechanical transmission according to claim 1, **characterised in that** the connections (1, 7, 10, 14) of the torque-splitting transmission comprise an input connection (1), an output connection (7) and two differential-action connections (10, 14), and that, in one of the forward drive modes, the clutch system (17, 23) connects the hydrostatic transmission (30) to the input connection (1) and to one of the differential-action connections (10) in an input-end arrangement.

3. Hydromechanical transmission according to claim 2, **characterised in that**, in one of the forward drive modes, the clutch system (17, 23) connects the hydrostatic transmission (30) to both the differential-action connections (10, 14) in a coupled arrangement.

4. Hydromechanical transmission according to claim 3, **characterised in that** the coupled arrangement corresponds to a medium transmission range of the hydromechanical transmission.

5. Hydromechanical transmission according to one of claims 2 to 4, **characterised in that**, in one of the forward drive modes, the clutch system (17, 23) connects the hydrostatic transmission (30) to one of the differential-action connections (14) and to the output connection (7) in an output-end arrangement.

6. Hydromechanical transmission according to claim 2 and claim 5, **characterised in that** the clutch system (17, 23) connects the hydrostatic transmission (30) to the first differential-action connection (14) in the output-end arrangement and to the second differential-action connection (10) in the input-end arrangement.

7. Hydromechanical transmission according to one of the preceding claims, **characterised in that** the torque-splitting transmission (3) comprises two planetary gearing stages (4, 5, 6; 8, 9, 6).

8. Hydromechanical transmission according to one of the preceding claims, **characterised in that** the torque-splitting transmission (3) and a reversing gear stage (31) which can be changed over between forward running and running in reverse are connected in series between the driving connection (1) of the hydromechanical transmission and the output drive connection (29) thereof.

9. Hydromechanical transmission according to one of the preceding claims, **characterised in that** the hydrostatic transmission (30) comprises a fluid circuit (27) having two hydrostatic units (16, 22) whose displacements are adjustable independently of one another.

10. Hydromechanical transmission according to claim 9, **characterised in that** the transmission ratio different from 0 and ∞ can be produced by different displacements of the hydrostatic units (16, 22), and **in that** the control unit (46) is adapted to produce this transmission ratio with smaller displacements when the speed of the driving connection (1) is high rather than when the speed of the driving connection (1) is low.

## Revendications

1. Transmission hydromécanique comprenant une transmission mécanique à répartition de couple (3), qui possède une pluralité de raccords (1, 7, 10, 14) pour assurer une alimentation de couple en entrée ou en sortie, ayant une transmission hydrostatique variable en continu (30), et ayant un système d'embrayage (17, 23) destiné à coupler la transmission hydrostatique (30) à deux raccords à la fois parmi les raccords (1, 7, 10, 14) de la transmission à répartition de couple, la transmission hydromécanique ayant au moins trois modes de marche AV et le système d'embrayage reliant la transmission hydrostatique (30) à une autre paire de raccords (1, 7, 10, 14) de la transmission à répartition de couple (3) dans chaque mode de marche AV, **caractérisée en ce qu'**au niveau de la transmission hydrostatique (30) il est possible de régler un rapport d'engrenage différent de 0 et de ∞ qui, dans deux des modes de marche AV, produit le même rapport d'engrenage global (i) entre un raccord menant (1) et un raccord mené (29), et **en ce qu'**une unité de commande (46) est conçue de façon à effectuer une permutation entre les deux modes de marche AV uniquement dans le cas de ce rapport d'engrenage différent de 0 et de ∞.

2. Transmission hydromécanique selon la revendication 1, **caractérisée en ce que** les raccords (1, 7, 10, 14) de la transmission à répartition de couple comprennent un raccord d'entrée (1), un raccord de sortie (7) et deux raccords à action différentielle (10, 14)et **en ce que** dans l'un des modes de marche AV, le système d'embrayage (17, 23) relie la transmission hydrostatique (30) au raccord d'entrée (1) et à l'un des raccords à action différentielle (10) dans un agencement du côté entrée.

3. Transmission hydromécanique selon la revendication 2, **caractérisée en ce que** dans l'un des modes de marche AV, le système d'embrayage (17, 23) relie la transmission hydrostatique (30) aux deux raccords à action différentielle (10, 14) dans un agencement de désaccouplement.

4. Transmission hydromécanique selon la revendication 3, **caractérisée en ce que** l'agencement de désaccouplement correspond à une gamme de démultiplication moyenne de la transmission hydromécanique.

5. Transmission hydromécanique selon l'une des revendications 2 à 4, **caractérisée en ce que** dans l'un des modes de marche AV, le système d'embrayage (17, 23) relie la transmission hydrostatique (30) à l'un des raccords à action différentielle (14) et au raccord de sortie (7) dans un agencement du côté sortie.

6. Transmission hydromécanique selon la revendication 3 et la revendication 6, **caractérisée en ce que** le système d'embrayage (17, 23) relie la transmission hydrostatique (30) au premier raccord à action différentielle (14) dans l'agencement du côté sortie, et au deuxième raccord à action différentielle (10) dans l'agencement du côté entrée.

7. Transmission hydromécanique selon l'une des revendications précédentes, **caractérisée en ce que** la transmission à répartition de couple (3) comprend deux étages de pignons planétaires (4, 5, 6; 8, 9, 6).

8. Transmission hydromécanique selon l'une des revendications précédentes, **caractérisée en ce que** la transmission à répartition de couple (3) et un étage de pignons de renversement (31) qui est permutable entre le sens de marche AV et le sens de marche AR, sont reliés en série entre le raccord menant (1) de la transmission hydromécanique et le raccord mené (29) de celle-ci.

9. Transmission hydromécanique selon l'une des revendications précédentes, **caractérisée en ce que** la transmission hydrostatique (30) comprend un circuit de fluide (27) muni de deux unités hydrostatiques (16, 22) dont les volumes de déplacement sont réglables indépendamment l'un de l'autre.

10. Transmission hydromécanique selon la revendication 9, **caractérisée en ce que** le rapport d'engrenage différent de 0 et de ∞ peut être obtenu à l'aide de divers volumes de déplacement des unités hydrostatiques (16, 22), et **en ce que** l'unité de commande (46) est conçue de façon à produire ce rapport d'engrenage avec des volumes de déplacement plus petits lorsque la vitesse du raccord menant (1) est élevée que dans le cas où la vitesse du raccord menant (1) est faible.
